# EUROPEAN PATENT SPECIFICATION

(11) **EP 4 431 358 B1**
(45) Date of publication and mention of the grant of the patent: **26.03.2025**
(21) Application number: 24153370.2
(22) Date of filing: 23.01.2024
(51) Int. Cl.: B60W 60/00

(54) **METHOD FOR PREDICTING VEHICLE TRAJECTORY, CONTROL DEVICE, READABLE STORAGE MEDIUM, AND VEHICLE**
VERFAHREN ZUR VORHERSAGE EINER FAHRZEUGTRAJEKTORIE, STEUERUNGSVORRICHTUNG, LESBARES SPEICHERMEDIUM UND FAHRZEUG
PROCÉDÉ DE PRÉDICTION DE TRAJECTOIRE DE VÉHICULE, DISPOSITIF DE COMMANDE, SUPPORT D'INFORMATIONS LISIBLE ET VÉHICULE

(30) Priority: 15.03.2023 CN 202310249549
(43) Date of publication of application: 18.09.2024
(73) Proprietor: Anhui NIO Autonomous Driving Technology Co., Ltd., Hefei, Anhui 230601 (CN)
(72) Inventor: PENG, Qixiang, Jiading district, shanghai (CN); QIN, Haibo, Jiading district, shanghai (CN); LI, Chuankang, Jiading district, shanghai (CN); WU, Bing, Jiading district, shanghai (CN); YAO, Maoqing, Jiading district, shanghai (CN)
(74) Representative: Vossius & Partner Patentanwälte Rechtsanwälte mbB

(56) References cited:
- CN-A- 114 238 542
- CN-A- 115 071 762
- US-A1- 2021 354 729
- EFTELIOGLU EMRE EFTELI@AMAZON COM ET AL: "RING-Net road inference from GPS trajectories using a deep segmentation network", PROCEEDINGS OF THE 6TH ACM SIGSPATIAL INTERNATIONAL WORKSHOP ON GEOSPATIAL HUMANITIES, ACMPUB27, NEW YORK, NY, USA, 1 November 2022 (2022-11-01), pages 17 - 26, XP058960207, ISBN: 978-1-4503-9535-9, DOI: 10.1145/3557917.3567617

## Description

### Technical Field

The invention relates to the technical field of autonomous driving, and specifically provides a method for predicting a vehicle trajectory, a control device, a readable storage medium, and a vehicle.

### Background Art

The functions of advanced driver assistance technology are increasingly recognized by users. At the same time, its application scenarios are continuously expanding with the advancement of sensors and information, and its functional experience is also continuously improving. For trajectory prediction, a key issue is how to provide a reasonable multimodal predicted trajectory to effectively assist an autonomous driving function.

A prediction method in the prior art is mainly rendering perceived information from a perception model into image features that are to be processed through a convolutional neural network for vehicle trajectory prediction. Due to a limited receptive field of the convolutional neural network, it is difficult to fully utilize and consider interaction between a surrounding environment and a self-vehicle as well as surrounding vehicles.

Accordingly, there is a need for a new solution for predicting a vehicle trajectory in the art to solve the above problem.

In US 2021/0354729 A1, systems and methods are disclosed for weighting one or more optional paths based on obstacle avoidance or other safety considerations. In some embodiments, the obstacle avoidance considerations may be computed using a comparison of trajectories representative of safety procedures at present and future projected time steps of an ego-vehicle and other actors to ensure that each actor is capable of implementing their respective safety procedure while avoiding collisions at any point along the trajectory. This comparison may include filtering out a path(s) of an actor at a time step(s) - e.g., using a one-dimensional lookup - based on spatial relationships between the actor and the ego-vehicle at the time step(s). Where a particular path - or point along the path - does not satisfy a collision-free standard, the path may be penalized more negatively with respect to the obstacle avoidance considerations, or may be removed from consideration as a potential path.

The article of Emre Eftelioglu et al, "RING-Net: Road Inference from GPS Trajectories using a Deep Segmentation Network, in the 10th ACM SIGSPATIAL International Workshop on Analytics for Big Geospatial Data (BigSpatial '22), November 1, 2022, New York, https://doi.org/10.1145/3557917.3567617, discloses an approach for Road INference from GPS trajectories using a deep image segmentation Network. Previous work on road inference is either focused on satellite images or GPS trajectories, but they are not compatible with each other when there is a lack of high quality data from either of the source types. Even though it is primarily focused on using GPS trajectories as its input, RING-Net architecture is flexible enough to be used with multiple data sources with minimal effort. More specifically, RING-Net converts raw GPS trajectories into multi-band raster images with trip related features, and infers roads with high precision. Experiments on public data show that Ring-Net can be used to improve the completeness of a road network. Our approach is promising to bring us one step closer to fully automated map updates.

### Summary

The subject-matter of the present invention is defined by the features of the independent claims. Further preferred embodiments of the present invention are defined in the dependent claims. In particular, in order to overcome the above defect, the invention is proposed to solve or at least partially solve the problem of how to effectively predict a multimodal trajectory of a vehicle.

According to a first aspect, the invention provides a method for predicting a vehicle trajectory. The method includes:
obtaining vectorized features of a plurality of target vehicles based on perceived information of an autonomous vehicle; and
obtaining a trajectory prediction result based on vectorized features of each of the target vehicles, to obtain a plurality of trajectory prediction results of the plurality of target vehicles, where
the plurality of target vehicles include the autonomous vehicle and a plurality of first surrounding vehicles, wherein the plurality of first surrounding vehicles being vehicles in a surrounding environment of the autonomous vehicle that are selected according to a preset first rule; and
the perceived information is obtained based on data acquired by a sensor of the autonomous vehicle; the obtaining vectorized features of a plurality of target vehicles further includes:
   based on the perceived information of the autonomous vehicle, obtaining self-vehicle trajectory vectorized features, surrounding trajectory vectorized features, and road network vectorized features of each of the target vehicles, where
   he surrounding trajectory vectorized features are trajectory vectorized features of a plurality of second surrounding vehicles of the target vehicle, the plurality of second surrounding vehicles being vehicles in a surrounding environment of the target vehicle that are selected according to a preset second rule;
   the obtaining a trajectory prediction result based on vectorized features of each of the target vehicles further includes:
      for each of the target vehicles, obtaining encoded features of the target vehicle based on the self-vehicle trajectory vectorized features, the surrounding trajectory vectorized features, and the road network vectorized features of the target vehicle; and
      obtaining the trajectory prediction result of the target vehicle based on the encoded features of the target vehicle.

In a technical solution of the foregoing method for predicting a vehicle trajectory, the obtaining encoded features of the target vehicle based on the self-vehicle trajectory vectorized features, the surrounding trajectory vectorized features, and the road network vectorized features of the target vehicle further includes:
encoding the self-vehicle trajectory vectorized features, the surrounding trajectory vectorized features, and the road network vectorized features to obtain self-vehicle trajectory encoded features, surrounding trajectory encoded features, and road network encoded features, respectively;
performing feature interaction on the self-vehicle trajectory encoded features, the surrounding trajectory encoded features, and the road network encoded features to obtain self-vehicle trajectory interaction features, surrounding trajectory interaction features, and environment interaction features, respectively; and
performing feature fusion on the self-vehicle trajectory interaction features, the surrounding trajectory interaction features, and the environment interaction features to obtain the encoded features of the target vehicle.

In a technical solution of the foregoing method for predicting a vehicle trajectory, the performing feature interaction on the self-vehicle trajectory encoded features, the surrounding trajectory encoded features, and the road network encoded features further includes:
for the self-vehicle trajectory encoded features, using an all-ones vector as environment information for feature interaction to obtain the self-vehicle trajectory interaction features;
for the surrounding trajectory encoded features, using the self-vehicle trajectory encoded features as environment information for feature interaction to obtain the surrounding trajectory interaction features; and
for the road network encoded features, using fusion features of the self-vehicle trajectory interaction features and the surrounding trajectory interaction features as environment information for feature interaction to obtain the road network interaction features.

In a technical solution of the foregoing method for predicting a vehicle trajectory, the method further includes obtaining the fusion features of the self-vehicle trajectory interaction features and the surrounding trajectory interaction features according to the step of:
performing feature fusion on the self-vehicle trajectory interaction features and the surrounding trajectory interaction features to obtain the fusion features.

In a technical solution of the foregoing method for predicting a vehicle trajectory, the obtaining the trajectory prediction result of the target vehicle based on the encoded features of the target vehicle includes:
using pre-learned anchor features as environment information, and obtaining multimodal features of the target vehicle based on the encoded features of the target vehicle; and
obtaining the trajectory prediction result of the target vehicle based on the multimodal features.

In a technical solution of the foregoing method for predicting a vehicle trajectory, the obtaining vectorized features of a plurality of target vehicles based on perceived information of an autonomous vehicle includes:
for each target vehicle, structuring the perceived information to obtain structured data of the target vehicle; and
adding semantic information to the structured data to obtain vectorized features of the target vehicle.

In a technical solution of the foregoing method for predicting a vehicle trajectory, for each target vehicle, as well as a vehicle trajectory of the target vehicle and vehicle trajectories of the plurality of second surrounding vehicles of the target vehicle in the perceived information, the structuring the perceived information includes:
performing sequential processing on the vehicle trajectory of the target vehicle and the vehicle trajectory of each of the second surrounding vehicles to obtain sequential data including a historical frame and a current frame of a preset length; and
converting the sequential data into a coordinate system with a current frame position of the target vehicle as an origin so that the sequential data is used as the structured data of the target vehicle.

In a technical solution of the foregoing method for predicting a vehicle trajectory, for each target vehicle, as well as road network information of a surrounding road network of the target vehicle in the perceived information, the structuring the perceived information includes:
segmenting a lane line in the road network information according to a preset distance to obtain a plurality of lane line segments;
converting endpoint coordinates of the lane line segments to the coordinate system with the current frame position of the target vehicle as the origin;
for the lane line segments in the coordinate system with the current frame position of the target vehicle as the origin, selecting from the lane line segments according to a preset third rule; and
using endpoint coordinates of the selected lane line segments as the structured data of the target vehicle.

According to a second aspect, a control device is provided. The control device includes at least one processor and at least one storage apparatus storing a plurality of program codes, where the program codes are adapted to be loaded and executed by the processor to perform the method for predicting a vehicle trajectory according to any one of the technical solutions of the foregoing method for predicting a vehicle trajectory.

According to a third aspect, a non-transitory computer-readable storage medium is provided. The computer-readable storage medium has a plurality of program codes stored therein, where the program codes are adapted to be loaded and executed by a processor to perform the method for predicting a vehicle trajectory according to any one of the technical solutions of the foregoing method for predicting a vehicle trajectory.

According to a fourth aspect, a vehicle is provided. The vehicle includes the control device in the technical solution of the foregoing control device.

The above one or more technical solutions of the invention have at least one or more of the following beneficial effects:
In the technical solutions for implementing the invention, according to the invention, perceived information of an autonomous vehicle is converted into vectorized features of a plurality of target vehicles, where the target vehicles include the autonomous vehicle and a plurality of first surrounding vehicles; and a plurality of trajectory prediction results of the plurality of target vehicles are obtained based on vectorized features of each target vehicle. Through the above configuration, the vectorized features in the invention are obtained based on the perceived information of the autonomous vehicle, which enables the vectorized features to include rich vehicle trajectory information and environment information of the target vehicle; and full interaction and fusion are performed based on the vectorized features of each target vehicle, so that a plurality of vehicle trajectories of each target vehicle can be effectively predicted to obtain a more reasonable multimodal trajectory prediction result of each target vehicle. This allows the autonomous vehicle itself to assist an autonomous driving function based on the trajectory prediction result of the target vehicle to achieve more accurate and reasonable autonomous driving control, effectively improving the user experience.

### Brief Description of the Drawings

The disclosed content of the invention will become more readily understood with reference to the accompanying drawings. Those skilled in the art readily understand that these accompanying drawings are merely for illustrative purposes and are not intended to limit the scope of protection which is defined by the features of the claims. In the drawings:
FIG. 1 is a schematic flowchart of main steps of a method for predicting a vehicle trajectory according to an embodiment of the invention;
FIG. 2 is a schematic flowchart of main steps of obtaining self-vehicle trajectory vectorized features and surrounding trajectory vectorized features of a target vehicle according to an implementation of an embodiment of the invention;
FIG. 3 is a schematic flowchart of main steps of obtaining road network vectorized features of a target vehicle according to an implementation of an embodiment of the invention;
FIG. 4 is a schematic diagram of main components of an encoder module according to an implementation of an embodiment of the invention;
FIG. 5 is a schematic diagram of main components of a decoder module according to an implementation of an embodiment of the invention; and
FIG. 6 is a schematic diagram of a trajectory prediction result of a target vehicle output by an encoder-decoder network model according to an example of an embodiment of the invention.

### Detailed Description of Embodiments

Some implementations of the invention are described below with reference to the accompanying drawings. Those skilled in the art should understand that these implementations are only used to explain the technical principles of the invention, wherein the scope of protection is defined by the features of the claims.

In the description of the invention, a "module" or "processor" may include hardware, software, or a combination thereof. A module may include a hardware circuit, various suitable sensors, a communication port, and a memory, or may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

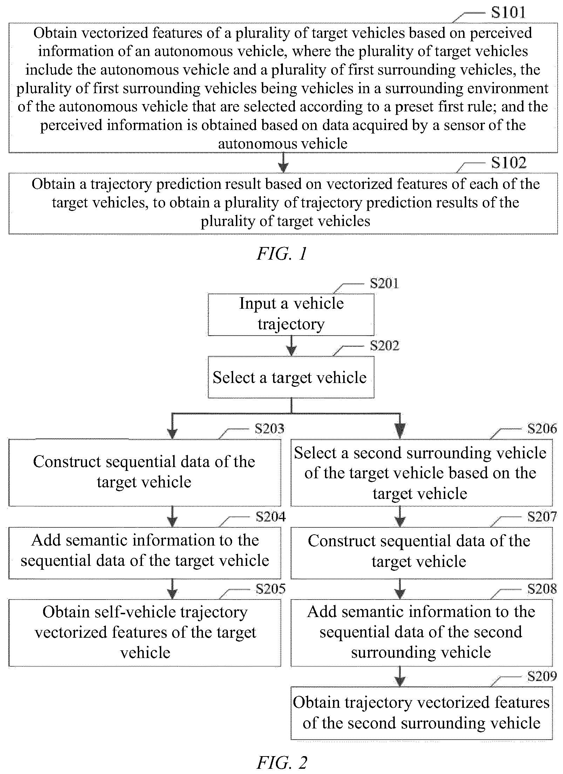

Referring to FIG. 1, FIG. 1 is a schematic flowchart of main steps of a method for predicting a vehicle trajectory according to an embodiment of the invention. As shown in FIG. 1, the method for predicting a vehicle trajectory in this embodiment of the invention mainly includes step S 101 and step S 102 as follows.

Step S101: Obtain vectorized features of a plurality of target vehicles based on perceived information of an autonomous vehicle, where the plurality of target vehicles include the autonomous vehicle and a plurality of first surrounding vehicles, the plurality of first surrounding vehicles being vehicles in a surrounding environment of the autonomous vehicle that are selected according to a preset first rule; and the perceived information is obtained based on data acquired by a sensor of the autonomous vehicle.

In this embodiment, the perceived information of the autonomous vehicle may be converted into the vectorized features of the plurality of target vehicles. The target vehicles may include the autonomous vehicle (i.e., the self-vehicle) and a plurality of first surrounding vehicles. The plurality of first surrounding vehicles are vehicles in the surrounding environment of the autonomous vehicle that are selected according to the preset first rule.

In an implementation, the data acquired by the sensor of the autonomous vehicle can be input into a perception model. The perception model can obtain, based on the data acquired by the sensor, the perceived information of the autonomous vehicle, such as its own vehicle trajectory, vehicle trajectories of the vehicles in the surrounding environment, and road network information in the surrounding environment.

In an implementation, the first rule may be a first preset number of vehicles closest to the autonomous vehicle (the self-vehicle). For example, the first preset number may be 24. Those skilled in the art may set the first rule and the first preset number according to requirements of a practical application. Those skilled in the art can understand that the vehicles determined by the first rule may include all vehicles in the surrounding environment that can be acquired by the self-vehicle through the sensor.

In an implementation, step S 101 may further include: based on the perceived information of the autonomous vehicle, obtaining self-vehicle trajectory vectorized features, surrounding trajectory vectorized features, and road network vectorized features of each of the target vehicles, where the surrounding trajectory vectorized features are trajectory vectorized features of a plurality of second surrounding vehicles of the target vehicle, the plurality of second surrounding vehicles being vehicles in a surrounding environment of the target vehicle that are selected according to a preset second rule.

In an implementation, the second rule may be a second preset number of vehicles closest to the target vehicle. For example, the second preset number may be 32. Those skilled in the art may set the second rule and the second preset number according to requirements of a practical application. Those skilled in the art can understand that the vehicles determined by the second rule may include all vehicles, other than the current target vehicles, in the surrounding environment that are acquired by the self-vehicle through the sensor.

Step S102: Obtain a trajectory prediction result based on vectorized features of each of the target vehicles, to obtain a plurality of trajectory prediction results of the plurality of target vehicles.

In this embodiment, a trajectory prediction result of each target vehicle may be obtained based on vectorized features of the target vehicle.

In an implementation, the vectorized features of each target vehicle can be input into an encoder-decoder network model, and a trajectory of each target vehicle can be predicted based on the vectorized features of the target vehicle to obtain the trajectory prediction result. Encoder-decoder is a model framework in deep learning, which uses an end-to-end algorithm to convert the input vectorized features into a fixed-length vector (encoding), and convert the fixed-length vector into an output sequence (decoding).

In an implementation, the encoder-decoder network model may include an encoder module and a decoder module.

In an implementation, the self-vehicle trajectory vectorized features, the surrounding trajectory vectorized features, and the road network vectorized features of the target vehicle can be input into the encoder module to obtain encoded features of the target vehicle, and then the encoded features are input into the decoder module to obtain the trajectory prediction result of the target vehicle.

Based on step S 101 and step S 102 described above, according to this embodiment of the invention, perceived information of an autonomous vehicle is converted into vectorized features of a plurality of target vehicles, where the target vehicles include the autonomous vehicle and a plurality of first surrounding vehicles; and a plurality of trajectory prediction results of the plurality of target vehicles are obtained based on vectorized features of each target vehicle. Through the above configuration, the vectorized features in this embodiment of the invention are obtained based on the perceived information of the autonomous vehicle, which enables the vectorized features to include rich vehicle trajectory information and environment information of the target vehicle; and full interaction and fusion are performed based on the vectorized features of each target vehicle, so that a plurality of vehicle trajectories of each target vehicle can be effectively predicted to obtain a more reasonable multimodal trajectory prediction result of each target vehicle. This allows the autonomous vehicle itself to assist an autonomous driving function based on the trajectory prediction result of the target vehicle to achieve more accurate and reasonable autonomous driving control, effectively improving the user experience.

Step S101 and step S 102 are further described below.

In an implementation of this embodiment of the invention, step S 101 may further include step S 1011 and S 1012 as follows.

Step S1011: For each target vehicle, structure the perceived information to obtain structured data of the target vehicle.

In this implementation, the perceived information may be structured to obtain the structured data of the target vehicle.

In an implementation, the perceived information may include a vehicle trajectory of the target vehicle and vehicle trajectories of a plurality of second surrounding vehicles of the target vehicle. Structuring may include sequential processing. Step S1011 may further include step S10112 and step S10112 as follows.

Step S10111: Perform sequential processing on the vehicle trajectory of the target vehicle and the vehicle trajectory of each of the second surrounding vehicles to obtain sequential data including a historical frame and a current frame of a preset length.

Step S10112: Convert the sequential data into a coordinate system with a current frame position of the target vehicle as an origin so that the sequential data is used as the structured data of the target vehicle.

In this implementation, the sequential processing may be first performed on the vehicle trajectory of the target vehicle and the vehicle trajectory of each of the second surrounding vehicles to obtain the sequential data including the historical frame and the current frames of the preset length. The sequential data may be then converted to the coordinate system with the current frame position of the target vehicle as the origin to obtain the structured data of the target vehicle.

In an implementation, the perceived information may include road network information of a surrounding road network of the target vehicle. Structuring may include segmentation. Step S1011 may further include step S10113 and step S10115 as follows.

Step S10113: Segment a lane line in the road network information according to a preset distance to obtain a plurality of lane line segments.

Step S10114: Convert endpoint coordinates of the lane line segments to the coordinate system with the current frame position of the target vehicle as the origin.

Step S10115: For the lane line segments in the coordinate system with the current frame position of the target vehicle as the origin, select from the lane line segments according to a preset third rule; and use endpoint coordinates of the selected lane line segments as the structured data of the target vehicle.

In this implementation, the lane line in the road network information may be segmented at equal distances to obtain a plurality of lane line segments, and the endpoint coordinates of these lane line segments are converted to the coordinate system with the current frame position of the target vehicle as the origin. A range of the road network information is relatively wide (such as within a radius of one kilometer), while only road network information within a small range needs to be selected for trajectory prediction. Therefore, the lane line segments can be selected according to the third rule to obtain the structured data of the target vehicle. Those skilled in the art may set the preset distance and the third rule according to requirements of a practical application.

In an implementation, the preset distance may be 10 m.

In an implementation, the third rule may be to select lane line segments within a range of 200 m around the target vehicle.

Step S1012: Add semantic information to the structured data to obtain vectorized features of the target vehicle.

In this implementation, the semantic information may be added to the structured data of the target vehicle to obtain the vectorized features. Semantic features of the vehicle trajectory may include a speed, size, type, and other information of the target vehicle. Semantic features of the road network information may include: a shortest distance between the lane line segment and the target vehicle; a unit vector pointing from the target vehicle to a nearest point; a unit vector of the lane line segment; a unit vector pointing from a start point of the lane line segment to an end point of the lane line segment; a length of the lane line segment; a length from the end point of the lane line segment to the nearest point; a lane line type of the lane line segment, etc. The addition of the semantic information can make the vectorized features have richer information, making it easier to predict a vehicle trajectory based on the vectorized features. It should be noted that only part of the semantic information is listed here, and those skilled in the art can add or delete the semantic information according to requirements of a practical application, which are all within the scope of protection of the invention.

In an implementation of this embodiment of the invention, step S 102 may further include step S1021 and step S1022 as follows.

Step S1021: For each of the target vehicles, obtain encoded features of the target vehicle based on the self-vehicle trajectory vectorized features, the surrounding trajectory vectorized features, and the road network vectorized features of the target vehicle.

In this implementation, step S 1021 may further include step S10211 to step S 10213 as follows.

Step S10211: Encode the self-vehicle trajectory vectorized features, the surrounding trajectory vectorized features, and the road network vectorized features to obtain self-vehicle trajectory encoded features, surrounding trajectory encoded features, and road network encoded features, respectively.

In an implementation, the encoder module in the encoder-decoder network model may be used to encode the self-vehicle trajectory vectorized features, the surrounding trajectory vectorized features, and the road network vectorized features.

Step S10212: Perform feature interaction on the self-vehicle trajectory encoded features, the surrounding trajectory encoded features, and the road network encoded features to obtain self-vehicle trajectory interaction features, surrounding trajectory interaction features, and environment interaction features, respectively.

In this implementation, step S10212 may further include step S102121 to step S102123 as follows.

Step S102121: For the self-vehicle trajectory encoded features, use an all-ones vector as environment information for feature interaction to obtain the self-vehicle trajectory interaction features.

Step S102122: For the surrounding trajectory encoded features, use the self-vehicle trajectory encoded features as environment information for feature interaction to obtain the surrounding trajectory interaction features.

Step S102123: For the road network encoded features, use fusion features of the self-vehicle trajectory interaction features and the surrounding trajectory interaction features as environment information for feature interaction to obtain the road network interaction features.

In this implementation, feature fusion may be performed on the self-vehicle trajectory interaction features and the surrounding trajectory interaction features to obtain fusion features.

Step S10213: Perform feature fusion on the self-vehicle trajectory interaction features, the surrounding trajectory interaction features, and the environment interaction features to obtain the encoded features of the target vehicle.

In this implementation, the feature fusion may be performed on the self-vehicle trajectory interaction features, the surrounding trajectory interaction features, and the road network interaction features to obtain the encoded features of the target vehicle.

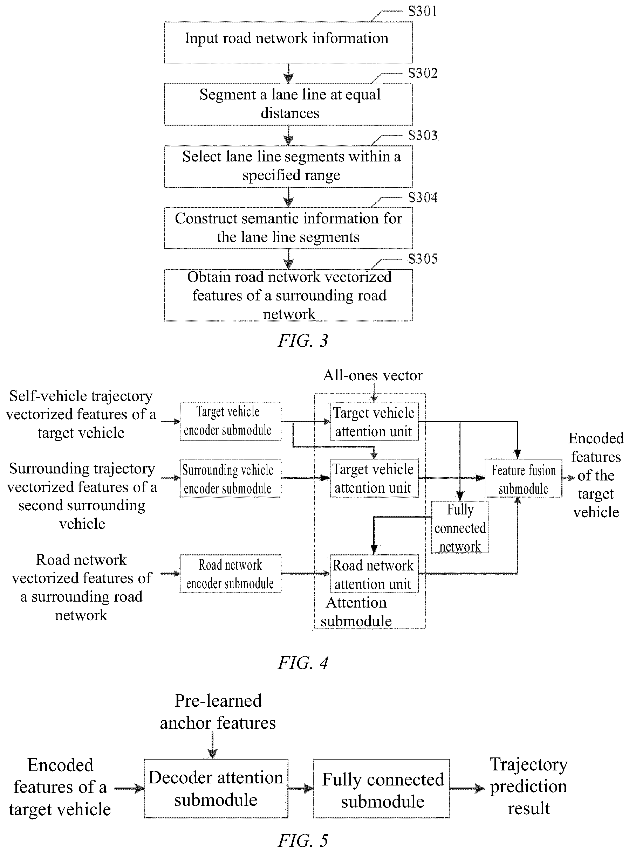

In an implementation, reference may be made to FIG. 4. FIG. 4 is a schematic diagram of main components of an encoder module according to an implementation of an embodiment of the invention. As shown in FIG. 4, the encoder module may include a target vehicle encoder submodule, a surrounding vehicle encoder submodule, a road network encoder submodule, an attention submodule, and a feature fusion submodule. The target vehicle encoder submodule in FIG. 4 may be used to learn sequential information of the self-vehicle trajectory vectorized features of the target vehicle, the surrounding vehicle encoder submodule may be used to learn sequential information of the surrounding trajectory vectorized features of the second surrounding vehicle, and the road network encoder submodule may be used to encode the semantic information in the road network. The target vehicle encoder submodule and the surrounding vehicle encoder submodule can be composed of a long short-term memory network (LSTM), and the road network encoder submodule can be composed of a fully connected network such as a multilayer perceptron (MLP).

In an implementation, the encoder attention submodule may be used to perform feature interaction on the self-vehicle trajectory encoded features of the target vehicle, the surrounding trajectory encoded features of the second surrounding vehicle, and the road network encoded features, thereby obtaining interaction features. The attention submodule can be used to solve the problem of information loss due to too long information during an encoding-decoding process.

The encoder attention submodule may include a target vehicle attention unit, a surrounding vehicle attention unit, and a road network attention unit. As shown in FIG. 4, the target vehicle attention unit uses the self-vehicle trajectory encoded features of the target vehicle as target information. Since the self-vehicle trajectory encoded features have no environment information (context), an all-ones vector may be input as environment information for feature interaction, and the target vehicle attention unit continue to learn the sequential information of the target vehicle, thereby obtaining the self-vehicle trajectory interaction features. The surrounding vehicle attention unit uses the self-vehicle trajectory encoded features of the target vehicle as environment information, and the surrounding trajectory encoded features of the second surrounding vehicle as target information for feature interaction, and learns interaction features of the target vehicle and the second surrounding vehicle, thereby obtaining the surrounding trajectory interaction features. The road network attention unit uses the fusion features of the self-vehicle trajectory interaction features and the surrounding trajectory interaction as environment information, and the road network encoded features as target information for feature interaction to obtain the road network interaction features of the surrounding road network.

In an implementation, as shown in FIG. 4, the feature fusion may be performed on the self-vehicle trajectory interaction features and the surrounding trajectory interaction features to obtain the fusion features. For example, the self-vehicle trajectory interaction features and the surrounding trajectory interaction features are input into the fully connected network for feature fusion, and an output of the fully connected network is used as the fusion features of the self-vehicle trajectory interaction features and the surrounding trajectory interaction features.

In an implementation, the target vehicle attention unit, the surrounding vehicle attention unit, and the road network attention unit each are composed of a fully connected network such as a multilayer perceptron (MLP) and a residual structure.

In an implementation, as shown in FIG. 4, the feature fusion submodule may be used to deeply fuse the self-vehicle trajectory interaction features, the surrounding trajectory interaction features, and the road network interaction features to obtain the encoded features of the target vehicle.

Step S1022: Obtain the trajectory prediction result of the target vehicle based on the encoded features of the target vehicle.

In this implementation, the trajectory prediction result of each target vehicle may be obtained based on the encoded features of the target vehicle.

In an implementation, the encoded features of the target vehicle may be input into the decoder module in the encoder-decoder network model to obtain the trajectory prediction result of the target vehicle.

Reference may be made to FIG. 5. FIG. 5 is a schematic diagram of main components of a decoder module according to an implementation of an embodiment of the invention. As shown in FIG. 5, the decoder module may include a decoder attention submodule and a fully connected submodule. Step S 1022 may further include step S10221 and step S10222 as follows.

Step S10221: Use pre-learned anchor features as environment information, and obtain multimodal features of the target vehicle based on the encoded features of the target vehicle.

In this implementation, the pre-learned anchor features may be used as environment information, the encoded features of the target vehicle may be used as target information, and the multimodal features of the target vehicle may be obtained by the decoder attention submodule. The multimodal features are features that include a plurality of modalities, which can describe a future trajectory of the target vehicle from a plurality of perspectives. The anchor features (learnable parameters) are self-learned parameters, which are learned through neural network training by using training data. The anchor features are related to the trajectory prediction result of the target vehicle, and they can guide the decoder module to predict and obtain the trajectory prediction result.

In an implementation, a structure of the decoder attention submodule is the same as the structure of the target vehicle attention unit, the surrounding vehicle attention unit, and the road network attention unit in the encoder attention submodule.

Step S10222: Obtain the trajectory prediction result of the target vehicle based on the multimodal features.

In this implementation, the multimodal features may be input into the fully connected submodule to obtain a plurality of trajectory prediction results of each target vehicle within a specified time range in the future.

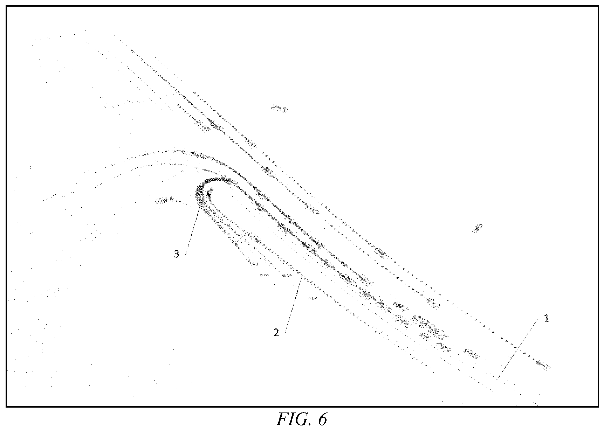

Reference may be made to FIG. 6. FIG. 6 is a schematic diagram of a trajectory prediction result of a target vehicle output by an encoder-decoder network model according to an example of an embodiment of the invention. As shown in FIG. 6, a rectangular box in FIG. 6 is the target vehicle. FIG. 6 shows road network information 1, an actual traveling trajectory 2 of the target vehicle, and a trajectory prediction result 3 of the target vehicle, where the color shade of the actual traveling trajectory and the trajectory prediction result represents the proximity in time. It can be seen from FIG. 6 that in an extremely difficult scenario where a vehicle makes a U-turn, a trajectory prediction result that is very close to an actual traveling trajectory can be predicted by using the vehicle trajectory prediction method according to this embodiment of the invention.

In an implementation, reference may be made to FIG. 2. FIG. 2 is a schematic flowchart of main steps of obtaining self-vehicle trajectory vectorized features and surrounding trajectory vectorized features of a target vehicle according to an implementation of an embodiment of the invention. As shown in FIG. 2, the self-vehicle trajectory vectorized features and the surrounding trajectory vectorized features of the target vehicle may be obtained through step S201 to step S209 as follows.

Step S201: Input a vehicle trajectory.

In this implementation, a vehicle trajectory obtained by a perception model may be input first.

Step S202: Select a target vehicle.

In this implementation, the target vehicle may be selected according to a first rule.

Step S203: Construct sequential data of the target vehicle.

In this implementation, a vehicle trajectory of the target vehicle may be subjected to sequential processing, and then converted to a coordinate system with a current frame position of the target vehicle as an origin, so as to obtain the sequential data of the target vehicle.

Step S204: Add semantic information to the sequential data of the target vehicle.

In this implementation, the semantic information may be added to the sequential data of the target vehicle.

Step S205: Obtain self-vehicle trajectory vectorized features of the target vehicle.

In this implementation, the sequential data with the semantic information added may be used as the self-vehicle trajectory vectorized features of the target vehicle.

Step S206: Select a second surrounding vehicle of the target vehicle based on the target vehicle.

In this implementation, the second surrounding vehicle of the target vehicle may be selected according to a second rule.

Step S207: Construct sequential data of the second surrounding vehicle.

In this implementation, a vehicle trajectory of the second surrounding vehicle may be subjected to sequential processing, and then converted to the coordinate system with the current frame position of the target vehicle as the origin, so as to obtain the sequential data of the second surrounding vehicle.

Step S208: Add semantic information to the sequential data of the second surrounding vehicle.

In this implementation, the semantic information may be added to the sequential data of the second surrounding vehicle.

Step S209: Obtain trajectory vectorized features of the second surrounding vehicle.

In this implementation, the sequential data with the semantic information added may be used as the surrounding trajectory vectorized features of the second surrounding vehicle.

In an implementation, reference may be made to FIG. 3. FIG. 3 is a schematic flowchart of main steps of obtaining road network vectorized features of a target vehicle according to an implementation of an embodiment of the invention. As shown in FIG. 3, the road network vectorized features may be obtained through step S301 to step S305 as follows.

Step S301: Input road network information.

In this implementation, road network information obtained by a perception model may be input.

Step S302: Segment a lane line at equal distances.

In this implementation, the method described in step S302 is similar to the foregoing step S10113. For simplicity of description, details are not described herein again.

Step S303: Select lane line segments within a specified range.

In this implementation, the method described in step S303 is similar to the foregoing step S10115. For simplicity of description, details are not described herein again.

Step S304: Construct semantic information for the lane line segments.

In this implementation, the semantic information may be constructed for the lane line segments.

Step S305: Obtain road network vectorized features of a surrounding road network.

In this implementation, the semantic information may be added to the selected lane line segments to obtain the vectorized features of the road network.

It should be noted that, although the steps are described in a specific order in the above embodiments, those skilled in the art may understand that in order to implement the effects of the invention, different steps are not necessarily performed in such an order, but may be performed simultaneously (in parallel) or in other orders, and these changes shall all fall within the scope of protection of the invention.

It should be noted that data (including but not limited to data used for analysis, data stored, data displayed, vehicle usage data, data acquired by a vehicle, data sensed by a vehicle, etc.) involved in the embodiments of the present invention are all data fully authorized by all parties. Actions such as the obtaining of the perceived data, acquisition, and construction of the vectorized features involved in the embodiments of this invention are all performed with the authorization of the user and the object, or after being fully authorized by all parties, and are also processed in accordance with processing rules authorized by the user.

Those skilled in the art can understand that all or some of the procedures in the method of the foregoing embodiment of the invention may also be implemented by a computer program instructing relevant hardware. The computer program may be stored in a computer-readable storage medium, and when the computer program is executed by a processor, the steps of the foregoing method embodiments may be implemented. The computer program includes computer program codes, which may be in a source code form, an object code form, an executable file form, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the invention further provides a control device. In a control device embodiment according to the invention, the control device includes a processor and a storage apparatus. The storage apparatus may be configured to store a program for performing the method for predicting a vehicle trajectory in the foregoing method embodiment. The processor may be configured to execute a program in the storage apparatus, where the program includes, but is not limited to, the program for performing the method for predicting a vehicle trajectory in the foregoing method embodiment. For ease of description, only parts related to the embodiment of the invention are shown. For specific technical details that are not disclosed, refer to the method part of the embodiments of the invention.

The control device in this embodiment of the invention may be a control device formed by various electronic devices. In some possible implementations, the control device may include a plurality of storage apparatuses and a plurality of processors. The program for performing the method for predicting a vehicle trajectory in the foregoing method embodiment may be divided into a plurality of subprograms, and each subprogram may be loaded and executed by the processor to perform different steps of the method for predicting a vehicle trajectory in the foregoing method embodiment. Specifically, each subprogram may be stored in a different storage apparatus, and each processor may be configured to execute programs in one or more storage apparatuses to jointly implement the method for predicting a vehicle trajectory in the foregoing method embodiment. In other words, each processor separately performs different steps of the method for predicting a vehicle trajectory in the foregoing method embodiment to jointly implement the method for predicting a vehicle trajectory in the foregoing method embodiment.

The plurality of processors may be processors deployed on a same device. For example, the foregoing control device may be a high-performance device including a plurality of processors, and the plurality of processors may be processors configured on the high-performance device. Alternatively, the plurality of processors may be processors deployed on different devices. For example, the foregoing control device may be a server cluster, and the plurality of processors may be processors on different servers in the server cluster.

Further, the invention further provides a non-transitory computer-readable storage medium. In a computer-readable storage medium embodiment according to the invention, the computer-readable storage medium may be configured to store a program for performing the method for predicting a vehicle trajectory in the foregoing method embodiment, and the program may be loaded and executed by a processor to implement the foregoing method for predicting a vehicle trajectory. For ease of description, only parts related to the embodiment of the invention are shown. For specific technical details that are not disclosed, refer to the method part of the embodiments of the invention. The computer-readable storage medium may be a storage apparatus formed by various electronic devices. Optionally, the computer-readable storage medium in the embodiment of the invention is a non-transitory computer-readable storage medium.

Further, the invention further provides a vehicle. In a vehicle embodiment according to the invention, the vehicle may include the control device in the control device embodiment.

Further, it should be understood that, because the configuration of modules is merely intended to illustrate function units of the apparatus in the invention, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or merged. Such a split or combination of specific modules does not cause the technical solutions to depart from the principle of the invention.

Heretofore, the technical solutions of the invention have been described with reference to the preferred implementations shown in the accompanying drawings. However, those skilled in the art can readily understand that the scope of protection of the invention is apparently not limited to these specific implementation.

## Claims

1. A method for predicting a vehicle trajectory, comprising:
obtaining (S101) vectorized features of a plurality of target vehicles based on perceived information of an autonomous vehicle; and
obtaining (S102) a trajectory prediction result based on vectorized features of each of the target vehicles, to obtain a plurality of trajectory prediction results of the plurality of target vehicles; wherein
the plurality of target vehicles comprise the autonomous vehicle and a plurality of first surrounding vehicles, wherein the plurality of first surrounding vehicles being vehicles in a surrounding environment of the autonomous vehicle that are selected according to a preset first rule; and
the perceived information is obtained based on data acquired by a sensor of the autonomous vehicle;
the obtaining vectorized features of a plurality of target vehicles further comprises:
based on the perceived information of the autonomous vehicle, obtaining self-vehicle trajectory vectorized features, surrounding trajectory vectorized features, and road network vectorized features of each of the target vehicles; wherein
the surrounding trajectory vectorized features are trajectory vectorized features of a plurality of second surrounding vehicles of the target vehicle, the plurality of second surrounding vehicles being vehicles in a surrounding environment of the target vehicle that are selected according to a preset second rule;
the obtaining a trajectory prediction result based on vectorized features of each of the target vehicles further comprises:
for each of the target vehicles, obtaining encoded features of the target vehicle based on the self-vehicle trajectory vectorized features, the surrounding trajectory vectorized features, and the road network vectorized features of the target vehicle; and
obtaining the trajectory prediction result of the target vehicle based on the encoded features of the target vehicle.

2. The method for predicting a vehicle trajectory according to claim 1 wherein the obtaining encoded features of the target vehicle based on the self-vehicle trajectory vectorized features, the surrounding trajectory vectorized features, and the road network vectorized features of the target vehicle further comprises:
encoding the self-vehicle trajectory vectorized features, the surrounding trajectory vectorized features, and the road network vectorized features to obtain self-vehicle trajectory encoded features, surrounding trajectory encoded features, and road network encoded features, respectively;
performing feature interaction on the self-vehicle trajectory encoded features, the surrounding trajectory encoded features, and the road network encoded features to obtain self-vehicle trajectory interaction features, surrounding trajectory interaction features, and environment interaction features, respectively; and
performing feature fusion on the self-vehicle trajectory interaction features, the surrounding trajectory interaction features, and the environment interaction features to obtain the encoded features of the target vehicle.

3. The method for predicting a vehicle trajectory according to claim 2, wherein the performing feature interaction on the self-vehicle trajectory encoded features, the surrounding trajectory encoded features, and the road network encoded features further comprises:
for the self-vehicle trajectory encoded features, using an all-ones vector as environment information for feature interaction to obtain the self-vehicle trajectory interaction features;
for the surrounding trajectory encoded features, using the self-vehicle trajectory encoded features as environment information for feature interaction to obtain the surrounding trajectory interaction features; and
for the road network encoded features, using fusion features of the self-vehicle trajectory interaction features and the surrounding trajectory interaction features as environment information for feature interaction to obtain the road network interaction features.

4. The method for predicting a vehicle trajectory according to claim 3, wherein the method further comprises obtaining the fusion features of the self-vehicle trajectory interaction features and the surrounding trajectory interaction features according to the step of:
performing feature fusion on the self-vehicle trajectory interaction features and the surrounding trajectory interaction features to obtain the fusion features.

5. The method for predicting a vehicle trajectory according to any one of claims 1 to 4, wherein the obtaining the trajectory prediction result of the target vehicle based on the encoded features of the target vehicle comprises:
using pre-learned anchor features as environment information, and obtaining multimodal features of the target vehicle based on the encoded features of the target vehicle; and
obtaining the trajectory prediction result of the target vehicle based on the multimodal features.

6. The method for predicting a vehicle trajectory according to claim 1, wherein the obtaining vectorized features of a plurality of target vehicles based on perceived information of an autonomous vehicle comprises:
for each target vehicle, structuring the perceived information to obtain structured data of the target vehicle; and
adding semantic information to the structured data to obtain vectorized features of the target vehicle.

7. The method for predicting a vehicle trajectory according to claim 6, wherein for each target vehicle, as well as a vehicle trajectory of the target vehicle and vehicle trajectories of the plurality of second surrounding vehicles of the target vehicle in the perceived information, the structuring the perceived information comprises:
performing sequential processing on the vehicle trajectory of the target vehicle and the vehicle trajectory of each of the second surrounding vehicles to obtain sequential data comprising a historical frame and a current frame of a preset length; and
converting the sequential data into a coordinate system with a current frame position of the target vehicle as an origin so that the sequential data is used as the structured data of the target vehicle.

8. The method for predicting a vehicle trajectory according to claim 6, wherein for each target vehicle, as well as road network information of a surrounding road network of the target vehicle in the perceived information, the structuring the perceived information comprises:
segmenting a lane line in the road network information according to a preset distance to obtain a plurality of lane line segments;
converting endpoint coordinates of the lane line segments to the coordinate system with the current frame position of the target vehicle as the origin;
for the lane line segments in the coordinate system with the current frame position of the target vehicle as the origin, selecting from the lane line segments according to a preset third rule; and
using endpoint coordinates of the selected lane line segments as the structured data of the target vehicle.

9. A control device, comprising at least one processor and at least one storage apparatus storing a plurality of program codes, wherein the program codes are adapted to be loaded and executed by the processor to perform the method for predicting a vehicle trajectory according to any one of claims 1 to 8.

10. A non-transitory computer-readable storage medium storing a plurality of pieces of program codes, wherein the program codes are adapted to be loaded and executed by a processor to perform the method for predicting a vehicle trajectory according to any one of claims 1 to 8.

11. A vehicle, comprising the control device according to claim 9.

## Patentansprüche

1. Verfahren zum Vorhersagen einer Fahrzeugbewegungsbahn, wobei das Verfahren Folgendes umfasst:
Erhalten (S101) vektorisierter Merkmale mehrerer Zielfahrzeuge auf der Grundlage wahrgenommener Informationen eines autonomen Fahrzeugs; und
Erhalten (S102) eines Bewegungsbahn-Vorhersageergebnisses auf der Grundlage vektorisierter Merkmale jedes der Zielfahrzeuge, um mehrere Bewegungsbahn-Vorhersageergebnisse der mehreren Zielfahrzeuge zu erhalten; wobei
die mehreren Zielfahrzeuge das autonome Fahrzeug und mehrere erste umgebende Fahrzeuge umfassen, wobei die mehreren ersten umgebenden Fahrzeuge Fahrzeuge in einer Umgebung des autonomen Fahrzeugs, die in Übereinstimmung mit einer im Voraus festgelegten ersten Regel gewählt werden, sind; und
die wahrgenommenen Informationen auf der Grundlage von Daten, die durch einen Sensor des autonomen Fahrzeugs erfasst werden, erhalten werden;
das Erhaltenen vektorisierter Merkmale mehrerer Zielfahrzeuge ferner Folgendes umfasst:
Erhalten vektorisierter Merkmale der Bewegungsbahn des eigenen Fahrzeugs, vektorisierter Merkmale umgebender Bewegungsbahnen und vektorisierter Merkmale des Straßennetzes jedes der Zielfahrzeuge auf der Grundlage der wahrgenommenen Informationen des autonomen Fahrzeugs; wobei
die vektorisierten Merkmale umgebender Bewegungsbahnen vektorisierte Merkmale der Bewegungsbahnen mehrerer zweiter umgebender Fahrzeuge des Zielfahrzeugs sind, wobei die mehreren zweiten umgebenden Fahrzeuge Fahrzeuge in einer Umgebung des Zielfahrzeugs, die in Übereinstimmung mit einer im Voraus festgelegten zweiten Regel gewählt werden, sind;
das Erhalten eines Bewegungsbahn-Vorhersageergebnisses auf der Grundlage vektorisierter Merkmale jedes der Zielfahrzeuge ferner Folgendes umfasst:
Erhalten codierter Merkmale des Zielfahrzeugs auf der Grundlage der vektorisierten Merkmale der Bewegungsbahn des eigenen Fahrzeugs, der vektorisierten Merkmale umgebender Bewegungsbahnen und der vektorisierten Merkmale des Straßennetzes des Zielfahrzeugs für jedes der Zielfahrzeuge; und
Erhalten des Bewegungsbahn-Vorhersageergebnisses des Zielfahrzeugs auf der Grundlage der codierten Merkmale des Zielfahrzeugs.

2. Verfahren zum Vorhersagen einer Fahrzeugbewegungsbahn nach Anspruch 1, wobei das Erhalten codierter Merkmale des Zielfahrzeugs auf der Grundlage der vektorisierten Merkmale der Bewegungsbahn des eigenen Fahrzeugs, der vektorisierten Merkmale umgebender Bewegungsbahnen und der vektorisierten Merkmale des Straßennetzes des Zielfahrzeugs ferner Folgendes umfasst:
Codieren der vektorisierten Merkmale der Bewegungsbahn des eigenen Fahrzeugs, der vektorisierten Merkmale umgebender Bewegungsbahnen und der vektorisierten Merkmale des Straßennetzes, um entsprechende codierte Merkmale der Bewegungsbahn des eigenen Fahrzeugs, codierte Merkmale umgebender Bewegungsbahnen und codierte Merkmale des Straßennetzes zu erhalten;
Ausführen einer Merkmalsinteraktion an den codierten Merkmalen der Bewegungsbahn des eigenen Fahrzeugs, an den codierten Merkmalen umgebender Bewegungsbahnen und an den codierten Merkmalen des Straßennetzes, um entsprechende Interaktionsmerkmale der Bewegungsbahn des eigenen Fahrzeugs, Interaktionsmerkmale umgebender Bewegungsbahnen und Interaktionsmerkmale der Umgebung zu erhalten; und
Ausführen einer Merkmalsfusion an den Interaktionsmerkmalen der Bewegungsbahn des eigenen Fahrzeugs, an den Interaktionsmerkmalen umgebender Bewegungsbahnen und an den Interaktionsmerkmalen der Umgebung, um die codierten Merkmale des Zielfahrzeugs zu erhalten.

3. Verfahren zum Vorhersagen einer Fahrzeugbewegungsbahn nach Anspruch 2, wobei das Ausführen einer Merkmalsinteraktion an den codierten Merkmalen der Bewegungsbahn des eigenen Fahrzeugs, an den codierten Merkmalen umgebender Bewegungsbahnen und an den codierten Merkmalen des Straßennetzes ferner Folgendes umfasst:
Verwenden eines Vektors vollständig aus Einsen als Umgebungsinformationen für die Merkmalsinteraktion, um die Interaktionsmerkmale der Bewegungsbahn des eigenen Fahrzeugs zu erhalten, für die codierten Merkmale der Bewegungsbahn des eigenen Fahrzeugs;
Verwenden der codierten Merkmale der Bewegungsbahn des eigenen Fahrzeugs als Umgebungsinformationen für die Merkmalsinteraktion, um die Interaktionsmerkmale umgebender Bewegungsbahnen zu erhalten, für die codierten Merkmale umgebender Bewegungsbahnen; und
Verwenden von Fusionsmerkmalen der Interaktionsmerkmale der Bewegungsbahn des eigenen Fahrzeugs und der Interaktionsmerkmale umgebender Bewegungsbahnen als Umgebungsinformationen für die Merkmalsinteraktion, um die Interaktionsmerkmale des Straßennetzes zu erhalten, für die codierten Merkmale des Straßennetzes.

4. Verfahren zum Vorhersagen einer Fahrzeugbewegungsbahn nach Anspruch 3, wobei das Verfahren ferner das Erhalten der Fusionsmerkmale der Interaktionsmerkmale der Bewegungsbahn des eigenen Fahrzeugs und der Interaktionsmerkmale umgebender Bewegungsbahnen in Übereinstimmung mit dem folgenden Schritt umfasst:
Ausführen einer Merkmalsfusion an den Interaktionsmerkmalen der Bewegungsbahn des eigenen Fahrzeugs und an den Interaktionsmerkmalen umgebender Bewegungsbahnen, um die Fusionsmerkmale zu erhalten.

5. Verfahren zum Vorhersagen einer Fahrzeugbewegungsbahn nach einem der Ansprüche 1 bis 4, wobei das Erhalten des Bewegungsbahn-Vorhersageergebnisses des Zielfahrzeugs auf der Grundlage der codierten Merkmale des Zielfahrzeugs Folgendes umfasst:
Verwenden im Voraus gelernter Ankermerkmale als Umgebungsinformationen und Erhalten multimodaler Merkmale des Zielfahrzeugs auf der Grundlage der codierten Merkmale des Zielfahrzeugs; und
Erhalten des Bewegungsbahn-Vorhersageergebnisses des Zielfahrzeugs auf der Grundlage der multimodalen Merkmale.

6. Verfahren zum Vorhersagen einer Fahrzeugbewegungsbahn nach Anspruch 1, wobei das Erhalten vektorisierter Merkmale mehrerer Zielfahrzeuge auf der Grundlage wahrgenommener Informationen eines autonomen Fahrzeugs Folgendes umfasst:
Strukturieren der wahrgenommenen Informationen, um strukturierte Daten des Zielfahrzeugs zu erhalten, für jedes Zielfahrzeug; und
Hinzufügen semantischer Informationen zu den strukturierten Daten, um vektorisierte Merkmale des Zielfahrzeugs zu erhalten.

7. Verfahren zum Vorhersagen einer Fahrzeugbewegungsbahn nach Anspruch 6, wobei das Strukturieren der wahrgenommenen Informationen für jedes Zielfahrzeug sowie für eine Fahrzeugbewegungsbahn des Zielfahrzeugs und für Fahrzeugbewegungsbahnen der mehreren zweiten umgebenden Fahrzeuge des Zielfahrzeugs in den wahrgenommenen Informationen Folgendes umfasst:
Ausführen einer sequentiellen Verarbeitung an der Fahrzeugbewegungsbahn des Zielfahrzeugs und an der Fahrzeugbewegungsbahn jedes der zweiten umgebenden Fahrzeuge, um sequentielle Daten zu erhalten, die ein historisches Bezugssystem und ein aktuelles Bezugssystem mit einer im Voraus festgelegten Länge umfassen; und
Umwandeln der sequentiellen Daten in ein Koordinatensystem mit einer aktuellen Bezugssystemposition des Zielfahrzeugs als einen Ursprung, sodass die sequentiellen Daten als die strukturierten Daten des Zielfahrzeugs verwendet werden.

8. Verfahren zum Vorhersagen einer Fahrzeugbewegungsbahn nach Anspruch 6, wobei das Strukturieren der wahrgenommenen Informationen für jedes Zielfahrzeug sowie für Straßennetzinformationen eines umgebenden Straßennetzes des Zielfahrzeugs in den wahrgenommenen Informationen Folgendes umfasst:
Segmentieren einer Leitlinie in den Straßennetzinformationen in Übereinstimmung mit einer im Voraus festgelegten Entfernung, um mehrere Leitliniensegmente zu erhalten;
Umwandeln von Endpunktkoordinaten der Leitliniensegmente in das Koordinatensystem mit der aktuellen Bezugssystemposition des Zielfahrzeugs als der Ursprung;
Auswählen aus den Leitliniensegmenten in Übereinstimmung mit einer im Voraus festgelegten dritten Regel für die Leitliniensegmente in dem Koordinatensystem mit der aktuellen Bezugssystemposition des Zielfahrzeugs als der Ursprung; und
Verwenden von Endpunktkoordinaten der gewählten Leitliniensegmente als die strukturierten Daten des Zielfahrzeugs.

9. Steuervorrichtung, die wenigstens einen Prozessor und wenigstens eine Speichervorrichtung, die mehrere Programmcodes speichert, umfasst, wobei die Programmcodes dafür ausgelegt sind, durch den Prozessor geladen und ausgeführt zu werden, um das Verfahren zum Vorhersagen einer Fahrzeugbewegungsbahn nach einem der Ansprüche 1 bis 8 auszuführen.

10. Nicht transitorisches computerlesbares Speichermedium, das mehrere Teile von Programmcode speichert, wobei die Programmcodes dafür ausgelegt sind, durch einen Prozessor geladen und ausgeführt zu werden, um das Verfahren zum Vorhersagen einer Fahrzeugbewegungsbahn nach einem der Ansprüche 1 bis 8 auszuführen.

11. Fahrzeug, das die Steuervorrichtung nach Anspruch 9 umfasst.

## Revendications

1. Procédé pour la prédiction de la trajectoire d'un véhicule, comprenant :
l'obtention (S101) de caractéristiques vectorisées d'une pluralité de véhicules cibles en se basant sur des informations perçues d'un véhicule autonome ; et
l'obtention (S102) d'un résultat de prédiction de trajectoire en se basant sur les caractéristiques vectorisées de chacun des véhicules cibles, afin d'obtenir une pluralité de résultats de prédiction de trajectoires de la pluralité de véhicules cibles ;
la pluralité de véhicules cibles comprenant le véhicule autonome et une pluralité de premiers véhicules aux alentours, la pluralité de premiers véhicules aux alentours étant des véhicules dans un environnement aux alentours du véhicule autonome qui sont sélectionnés selon une première règle prédéterminée ; et
les informations perçues étant obtenues en se basant sur des données acquises par un capteur du véhicule autonome ;
l'obtention des caractéristiques vectorisées d'une pluralité de véhicules cibles comprenant en outre :
en se basant sur les informations perçues du véhicule autonome, l'obtention de caractéristiques vectorisées de la trajectoire du véhicule lui-même, de caractéristiques vectorisées des trajectoires aux alentours, et de caractéristiques vectorisées du réseau routier de chacun des véhicules cibles ;
les caractéristiques vectorisées des trajectoires aux alentours étant des caractéristiques vectorisées de trajectoires d'une pluralité de deuxièmes véhicules aux alentours du véhicule cible, la pluralité de deuxièmes véhicules aux alentours étant des véhicules dans un environnement aux alentours du véhicule cible qui sont sélectionnés selon une deuxième règle prédéterminée ;
l'obtention d'un résultat de prédiction de trajectoire en se basant sur les caractéristiques vectorisées de chacun des véhicules cibles comprenant en outre :
pour chacun des véhicules cibles, l'obtention de caractéristiques codées du véhicule cible en se basant sur les caractéristiques vectorisées de la trajectoire du véhicule lui-même, sur les caractéristiques vectorisées des trajectoires aux alentours, et sur les caractéristiques vectorisées du réseau routier du véhicule cible ; et
l'obtention du résultat de prédiction de la trajectoire du véhicule cible en se basant sur les caractéristiques codées du véhicule cible.

2. Procédé pour la prédiction de la trajectoire d'un véhicule selon la revendication 1, dans lequel l'obtention des caractéristiques codées du véhicule cible en se basant sur les caractéristiques vectorisées de la trajectoire du véhicule lui-même, sur les caractéristiques vectorisées des trajectoires aux alentours, et sur les caractéristiques vectorisées du réseau routier du véhicule cible comprend en outre :
le codage des caractéristiques vectorisées de la trajectoire du véhicule lui-même, des caractéristiques vectorisées des trajectoires aux alentours, et des caractéristiques vectorisées du réseau routier afin d'obtenir les caractéristiques codées de la trajectoire du véhicule lui-même, les caractéristiques codées des trajectoires aux alentours et les caractéristiques codées du réseau routier, respectivement ;
l'exécution d'une interaction des caractéristiques sur les caractéristiques codées de la trajectoire du véhicule lui-même, sur les caractéristiques codées des trajectoires aux alentours et sur les caractéristiques codées du réseau routier afin d'obtenir les caractéristiques d'interaction de la trajectoire du véhicule lui-même, les caractéristiques d'interaction des trajectoires aux alentours, et les caractéristiques d'interaction avec les alentours, respectivement ; et
l'exécution de la fusion des caractéristiques sur les caractéristiques d'interaction de la trajectoire du véhicule lui-même, sur les caractéristiques d'interaction des trajectoires aux alentours et sur les caractéristiques d'interaction avec les alentours afin d'obtenir les caractéristiques codées du véhicule cible.

3. Procédé pour la prédiction de la trajectoire d'un véhicule selon la revendication 2, dans lequel l'exécution de l'interaction des caractéristiques sur les caractéristiques codées de la trajectoire du véhicule lui-même, sur les caractéristiques codées des trajectoires aux alentours, et sur les caractéristiques codées du réseau routier comprend en outre :
pour les caractéristiques codées de la trajectoire du véhicule lui-même, l'utilisation d'un vecteur tous-uns comme informations sur les alentours pour l'interaction des caractéristiques afin d'obtenir les caractéristiques d'interaction de la trajectoire du véhicule lui-même ;
pour les caractéristiques codées des trajectoires aux alentours, l'utilisation des caractéristiques codées de la trajectoire du véhicule lui-même comme informations sur les alentours pour l'interaction des caractéristiques afin d'obtenir les caractéristiques d'interaction des trajectoires aux alentours ; et
pour les caractéristiques codées du réseau routier, l'utilisation de caractéristiques de fusion des caractéristiques d'interaction de la trajectoire du véhicule lui-même et des caractéristiques d'interaction des trajectoires aux alentours comme informations sur les alentours pour l'interaction des caractéristiques afin d'obtenir les caractéristiques d'interaction du réseau routier.

4. Procédé pour la prédiction de la trajectoire d'un véhicule selon la revendication 3, ce procédé comprenant en outre l'obtention des caractéristiques de fusion des caractéristiques d'interaction de la trajectoire du véhicule lui-même et des caractéristiques d'interaction des trajectoires aux alentours selon l'étape consistant à :
exécuter la fusion des caractéristiques sur les caractéristiques d'interaction de la trajectoire du véhicule lui-même et sur les caractéristiques d'interaction des trajectoires aux alentours afin d'obtenir les caractéristiques de fusion.

5. Procédé pour la prédiction de la trajectoire d'un véhicule selon l'une quelconque des revendications 1 à 4, dans lequel l'obtention du résultat de prédiction de la trajectoire du véhicule cible en se basant sur les caractéristiques codées du véhicule cible comprend :
l'utilisation de caractéristiques d'ancrage pré-apprises comme informations sur les alentours, et l'obtention des caractéristiques multimodales du véhicule cible en se basant sur les caractéristiques codées du véhicule cible ; et
l'obtention du résultat de prédiction de la trajectoire du véhicule cible en se basant sur les caractéristiques multimodales.

6. Procédé pour la prédiction de la trajectoire d'un véhicule selon la revendication 1, dans lequel l'obtention des caractéristiques vectorisées d'une pluralité de véhicules cibles en se basant sur des informations perçues d'un véhicule autonome comprend :
pour chaque véhicule cible, la structuration des informations perçues afin d'obtenir des données structurées du véhicule cible ; et
l'addition d'informations sémantiques aux données structurées afin d'obtenir les caractéristiques vectorisées du véhicule cible.

7. Procédé pour la prédiction de la trajectoire d'un véhicule selon la revendication 6, dans lequel, pour chaque véhicule cible, de même que pour une trajectoire de véhicule du véhicule cible et que pour des trajectoires de véhicules de la pluralité de deuxièmes véhicules aux alentours du véhicule cible dans les informations perçues, la structuration des informations perçues comprend :
l'exécution d'un traitement séquentiel sur la trajectoire de véhicule du véhicule cible et sur la trajectoire de véhicule de chacun des deuxièmes véhicules aux alentours afin d'obtenir des données séquentielles comprenant un cadre historique et un cadre courant d'une longueur prédéterminée ; et
la conversion de ces données séquentielles en un système de coordonnées avec une position du cadre courant du véhicule cible comme une origine de telle sorte que les données séquentielles sont utilisées comme les données structurées du véhicule cible.

8. Procédé pour la prédiction de la trajectoire d'un véhicule selon la revendication 6, dans lequel, pour chaque véhicule cible, de même que pour des informations sur le réseau routier d'un réseau routier aux alentours du véhicule cible dans les informations perçues, la structuration des informations perçues comprend :
la segmentation d'une ligne de voie dans les informations sur le réseau routier selon une distance prédéterminée afin d'obtenir une pluralité de segments de ligne de voie ;
la conversion des coordonnées d'extrémité des segments de ligne de voie en le système de coordonnées avec la position du cadre courant du véhicule cible comme l'origine ;
pour les segments de ligne de voie dans le système de coordonnées avec la position du cadre courant du véhicule cible comme l'origine, la sélection parmi les segments de ligne de voie selon une troisième règle prédéterminée ; et
l'utilisation des coordonnées d'extrémité des segments de ligne de voie sélectionnés comme les données structurées du véhicule cible.

9. Dispositif de commande, comportant au moins un processeur et au moins un appareil de stockage stockant une pluralité de codes de programme, ces codes de programme étant adaptés pour être chargés et exécutés par le processeur afin d'exécuter le procédé pour la prédiction de la trajectoire d'un véhicule selon l'une quelconque des revendications 1 à 8.

10. Support de stockage non transitoire lisible par ordinateur stockant une pluralité d'éléments de codes de programme, ces codes de programme étant adaptés pour être chargés et exécutés par un processeur afin d'exécuter le procédé pour la prédiction de la trajectoire d'un véhicule selon l'une quelconque des revendications 1 à 8.

11. Véhicule, comportant le dispositif de commande selon la revendication 9.
